# EUROPEAN PATENT APPLICATION

(11) **EP 2 269 452 A1**
(43) Date of publication of application: **05.01.2011**
(21) Application number: 09733762.0
(22) Date of filing: 23.04.2009
(51) Int. Cl.: A01N 25/12, A01N 37/30, A01N 43/50, A01N 43/78, A01N 47/34, A01N 47/40, A01N 47/44, A01P 3/00, A01P 7/04, A01P 13/00

(54) **GRANULAR PESTICIDE COMPOSITION AND METHOD OF PRODUCING THE SAME**

(30) Priority: 25.04.2008 JP 2008114995
(71) Applicant: Nippon Soda Co., Ltd., Tokyo 100-8165 (JP)
(72) Inventor: ENDO, Yoshihisa, Makinohara-shi Shizuoka 421-0412 (JP); YAMAMURA, Satoru, Makinohara-shi Shizuoka 421-0412 (JP)
(74) Representative: Wills, Andrew Jonathan
(86) International application number: PCT/JP2009/001873
(87) International publication number: WO 2009/130910

(57) **Abstract**

A method of producing a granular agrochemical composition having excellent handling properties, wherein a powdered agrochemical wettable composition or powdered agrochemical water-soluble composition is converted in form to a granular agrochemical composition, without altering the formulation thereof. The method of producing a granular agrochemical composition includes: treating a powdered agrochemical wettable composition or powdered agrochemical water-soluble composition by (1) a step of adding water, kneading, extruding and drying, (2) a step of adding water, granulating by stirring and drying, (3) a step of adding water, kneading and spray-drying, (4) a step of adding water and performing fluidized bed granulation, or (5) a step of pressure molding the powdered agrochemical wettable composition or powdered agrochemical water-soluble composition; followed by (a) a step of performing microgranulation by grinding, and if necessary, (b) a step of performing grain size regulation by sieving.

## Description

### TECHNICAL FIELD

The present invention relates to a granular agrochemical composition and a method of producing the same. More specifically, the invention relates to a method of producing a granular agrochemical composition that uses a powdered agrochemical composition as a starting raw material and is able to produce the granular composition without altering the formulation of the composition, as well as an agrochemical composition produced using the method. The granular agrochemical composition of the present invention exhibits excellent properties in terms of ease of handling, ease of measurability, prevention of dust of the chemical agent and ease of application, and is therefore very useful in the field of agriculture.
Priority is claimed on Japanese Patent Application No. 2008-114995, filed April 25,2008, the content of which is incorporated herein by reference.

### BACKGROUND ART

Powdered products, granular products, wettable powders and water-soluble products have conventionally been used as solid agrochemical products. Particularly in the case of application to fruit trees and vegetables and the like, wettable powders, water-soluble products or liquid products have generally been preferred in order to eliminate soiling caused by adhesion of the agrochemical to the surfaces of the fruit and vegetables.

Wettable powders and water-soluble products are mainly provided in a powdered form, but powdered products suffer a number of drawbacks, including (1) a low apparent specific gravity and high bulk, (2) airborne scattering of the chemical agent during weighing or preparation of a liquid product, leading to potential absorption by workers or the surrounding environment, and (3) poor flowability due to the powdered state, making weighing difficult.

One possible countermeasure to these types of problems involves packaging the wettable powder or water-soluble product using a water-soluble film or water-soluble paper, and then using a technique such as heat sealing to produce a sealed packaged product. However, when these types of packaged products are diluted to prepare spray solutions, residues of the water-soluble film that have not completely dissolved in the dilute solution may cause blockages of the spray nozzles, making spraying impossible. Accordingly, with existing wettable powders and water-soluble products, a technique that provides ready workability and superior safety for the operator, and is also able to resolve the problem of spray nozzle blockages has yet to be developed.

Against this type of background, there has been a growing demand for granular products in recent years.
Granular products, and specifically granulated wettable powders and granular water-soluble products offer various advantages, including (1) a higher apparent specific gravity than wettable powders or water-soluble products with less bulkiness, (2) no airborne scattering of fine powders during suspension in water to prepare spray liquids, meaning there is no danger of operators absorbing chemical agents, and (3) easier weighing of the products.

In terms of production of granular agrochemical compositions, Patent Document 1 discloses a method of producing a granular agrochemical composition that includes adding a predetermined amount of water to a mixture containing at least one agrochemical active ingredient and a surfactant, and then performing kneading to obtain a kneaded product, and subsequently granulating the thus obtained kneaded product by grinding.

Patent Document 2 discloses the method described below as a method of producing a granular agrochemical product. Namely, a mixture is prepared containing the agrochemical active ingredient and other components, and the mixture is pulverized using a mill. Subsequently, water is added to the pulverized material and kneaded to obtain a kneaded product. The granular agrochemical product is then produced by subjecting the kneaded product to granulating, drying, grain size regulation and sieving.

Generally, when producing agrochemical products, production of the product in a different form requires that the formulation for producing the product is developed from scratch. For example, a powdered product and a granular product are usually produced using different formulations even if the active ingredient is the same in each case. Developing these formulations requires considerable effort, and registration procedures must be performed for each different formulation.

On the other hand, Patent Document 3 discloses a method of producing an agrochemical molded item, wherein by using a molded item of an agrochemical composition containing an agrochemical active ingredient and a thermoplastic material as a starting raw material, and subjecting the molded item to heating or a heat retention treatment, an agrochemical molded item having a different release rate can be produced without altering the shape of the molded item.
The invention described in this document is an invention in which a product in the form of a molded item is subjected to an additional treatment, thus producing a product having different properties (release rate) from the properties at the time of molding, but the shape of the molded item does not change over the course of the treatment, and the invention does not provide a method of producing a product having a different form.

### PRIOR ART DOCUMENTS

### PATENT DOCUMENTS

[Patent Document 1]
   Japanese Unexamined Patent Application, First Publication No. 2001-288004
[Patent Document 2]
   Japanese Unexamined Patent Application, First Publication No. 2004-26685
[Patent Document 3]
   Japanese Unexamined Patent Application, First Publication No. 2005-8619

### DISCLOSURE OF INVENTION

### PROBLEMS TO BE SOLVED BY THE INVENTION

An object of the present invention is to provide a method of producing a granular agrochemical composition having excellent handing properties, wherein a wettable product or water-soluble product is converted only in form to a granular form without altering the formulation thereof.

### MEANS TO SOLVE THE PROBLEMS

As a result of investigations aimed at achieving the above object, the inventors of the present invention discovered that by adding water to a powdered agrochemical wettable composition or a powdered agrochemical water-soluble composition, subsequently kneading, extruding and drying the mixture, and then performing grinding, a granular agrochemical composition could be produced. They also discovered that granular agrochemical compositions could also be produced using other methods, and they were therefore able to complete the present invention.

In other words, the present invention relates to:
(i) a method of producing a granular agrochemical composition in which by conducting one of steps (1) to (5) below, followed by steps (a) and (b), a powdered agrochemical wettable composition or a powdered agrochemical water-soluble composition is converted in form to a granular agrochemical composition, without altering the components or component proportions within the composition:
   (1) a step of adding water to the powdered agrochemical wettable composition or powdered agrochemical water-soluble composition, and then performing kneading, extruding and drying,
   (2) a step of adding water to the powdered agrochemical wettable composition or powdered agrochemical water-soluble composition, and then performing stirring granulation and drying,
   (3) a step of adding water to the powdered agrochemical wettable composition or powdered agrochemical water-soluble composition, and then performing kneading and spray-drying,
   (4) a step of adding water to the powdered agrochemical wettable composition or powdered agrochemical water-soluble composition, and then performing fluidized bed granulation,
   (5) a step of pressure molding the powdered agrochemical wettable composition or powdered agrochemical water-soluble composition,
      (a) a step of performing microgranulation by grinding, and
      (b) if necessary, a step of performing grain size regulation by sieving following the microgranulation.

Further, the present invention also relates to:
(ii) the method according to (i), wherein the powdered agrochemical wettable composition is a TOPSIN-M (a registered trademark) wettable powder, a TRIFMINE (a registered trademark) wettable powder, a BELLKUTE (a registered trademark) wettable powder, or a NISSORUN (a registered trademark) wettable powder,
(iii) the method according to (i), wherein the powdered agrochemical water-soluble composition is a MOSPILAN (a registered trademark) water-soluble composition or a B-NINE (a registered trademark) 80 water-soluble composition, and
(iv) a granular agrochemical composition produced by the method according to any one of (i) to (iii).

### EFFECT OF THE INVENTION

According to the present invention, a powdered agrochemical wettable composition or a powdered agrochemical water-soluble composition can be converted only in form to a granular agrochemical composition without altering the formulation of the composition.
By altering only the form of the composition to a granular form without changing the formulation of the wettable powder composition or water-soluble composition, there is no danger of the types of spray nozzle blockages that can occur when a packaged product is diluted. Further, because the obtained granular agrochemical composition does not suffer from dusting, and yet exhibits satisfactory disintegration and suspension properties, it satisfies the requirements for ease of handling and operator safety. Moreover, because the formulation need not be redeveloped, the labor required for research and the like can be reduced.

### BEST MODE FOR CARRYING OUT THE INVENTION

### (Agrochemical compositions that function as raw materials)

Although there are no particular limitations on the powdered agrochemical composition that functions as the raw material for the production method of the present invention, a wettable powder and/or a water-soluble product is preferred. The present invention uses a powdered agrochemical composition containing at least one agrochemical active ingredient as a starting raw material. The powdered agrochemical composition that functions as the raw material for the present invention may be the final product form that is commercially available as a powdered agrochemical product, or a powdered half-finished product that is formed prior to commercial sale.

A powdered agrochemical composition describes a finely powdered agrochemical composition prepared by mixing an agrochemical active ingredient with carriers, extenders and surfactants and the like, and then pulverizing the resulting mixture. Although there are no particular limitations on the composition, examples include powders, wettable powders and water-soluble compositions, and a wettable powder and/or water-soluble composition is preferred. There are no particular limitations on the particle size of the powdered agrochemical composition, and for example, powdered products having particle sizes from 0.1 to 45 µm can be used.

Specific examples of powdered wettable compositions and water-soluble compositions include the following agrochemical products, which are listed using their trade names (registered trademarks) followed by the names registered with the Ministry of Agriculture, Forestry and Fisheries in parentheses. Insecticides and acaricides such as ADMIRE wettable powder (imidacloprid wettable powder), PHOSKURIN wettable powder (isoxathion-inethomyl wettable powder), LANNATE 45 wettable powder (methomyl wettable powder) and NISSORUN wettable powder (hexythiazox wettable powder), and fungicides and herbicides such as ALIETTE wettable powder (fosetyl wettable powder), ORTHOCIDE wettable powder 80 (Captan wettable powder), TOPSIN-M wettable powder (thiophanate-methyl wettable powder), TRIFMINE wettable powder (triflumizole wettable powder), BENLATE wettable powder (benomyl wettable powder), B-NINE wettable powder 80 (diaminozide wettable powder), BELLKUTE wettable powder (iminoctadine albesillate wettable powder), MONCUT wettable powder (flutolanil wettable powder), ROVRAL wettable powder (iprdione wettable powder), SIMAZINE (CAT wettable powder) and DIURON (DCMU wettable powder).

Of these, a TOPSIN-M (a registered trademark) wettable powder, a TRIFMINE (a registered trademark) wettable powder, a BELLKUTE (a registered trademark) wettable powder, or a NISSORUN (a registered trademark) wettable powder is preferred as the powdered agrochemical wettable composition. A MOSPILAN (a registered trademark) water-soluble composition or a B-NINE (a registered trademark) 80 water-soluble composition is preferred as the powdered agrochemical water-soluble composition.

### (Granular agrochemical composition of the present invention)

A granular agrochemical composition produced using the method of the present invention has the same product formulation and same component proportions as the powdered agrochemical composition that functions as the raw material. The product formulation includes the agrochemical active ingredient, as well as carriers, extenders and surfactants and the like.

Examples of additives and carriers that may be added to the agrachemical composition include plant-based powders such as soybean flour, wheat flour, mineral-based fine powders of materials such as diatomaceous earth, apatite, calcium sulfate, talc, bentonite, pyrophyllite and clay, as well as organic and inorganic compounds such as sodium benzoate, urea and sodium sulfate.

There are no particular limitations on the surfactants that may be added to the agrochemical composition, and examples include nonionic surfactants such as polyoxyethylene adducts of alkyl phenyl ethers, polyoxyethylene adducts of alkyl ethers, polyoxyethylene adducts of higher fatty acid esters, polyoxyethylene adducts of sorbitan higher fatty acid esters and polyoxyethylene adducts of tristyryl phenyl ether, as well as sulfate esters of polyoxyethylene adducts of alkyl phenyl ethers, alkylbenzenesulfonates, sulfate esters of higher alcohols, alkylnaphthalenesulfonates, polycarboxylates, lignosulfonates, alkylnaphthalenesulfonate formaldehyde condensates, and isobutylene-maleic anhydride copolymers.

The shape of the granular agrochemical composition produced in the present invention is amorphous. The grain size of the granules is preferably within a range from 50 to 2,000 µm, and more preferably from 100 to 800 µm. However, all of the granules need not necessarily have a grain size that falls within this range, provided that the grain size that represents the maximum within the total grain size distribution falls within this range.
Grain sizes of 50 µm and smaller fall within the range for powdered wettable powders, and suppressing dusting of the composition during handling becomes difficult. In contrast, if the grain size exceeds 2,000 µm, then the water solubility of the composition tends to deteriorate.

Furthermore, in order to ensure even better safety for users of the granular agrochemical composition of the present invention, the composition may be packaged using a water-soluble film or water-soluble paper, and then sealed by heat sealing or the like to produce a packaged product.

### (Production method of the present invention)

The method of the present invention includes basically steps for adding water to a powdered agrochemical wettable composition or a powdered agrochemical water-soluble composition, followed by granulating and drying. Moreover, the method also includes a microgranulation step of grinding the granulated material produced in the above steps, and if necessary, a grain size regulation step or sieving the microgranulated grains.
Specifically, the method includes one of the methods (1) to (5) detailed below, together with the methods (a) and (b).

One method of the present invention is (1) a method of adding water to a powdered agrochemical wettable composition or a powdered agrochemical water-soluble composition, and then performing kneading, extruding and drying.

Conventional conditions and methods may be used for adding the water to the powdered agrochemical wettable composition or powdered agrochemical water-soluble composition. For example, the water may be dripped, sprayed or misted onto the powdered agrochemical wettable composition or powdered agrochemical water-soluble composition, and the resulting mixture then kneaded to prepare a kneaded material.
There are no particular limitations on the water used in the present invention, and examples include purified water such as tap water, industrial water, distilled water, ion exchange resin-treated water, reverse osmosis (RO) treated water, and ultrafiltration (UF) treated water, or natural water sources such as subterranean water and spring water.

A kneader may be used for the kneading, and examples of the kneader include nauta mixers, ribbon mixers, Henschel mixers and kneader. Of these, a kneader is preferred.
The amount of water used during kneading is typically within a range from 3 to 70% by weight, and preferably from 5 to 60% by weight. The kneading time varies depending on the production scale and the type of kneading device being used, but is typically within a range from 3 to 60 minutes, and preferably from 5 to 20 minutes.

Subsequently, a granulator is used to prepare a granulated material from the kneaded material. Examples of the granulator include basket-type granulators, extrusion granulators such as horizontal extruders, twin dome granulators, single dome granulators and pelletizers, and compression granulators such as roller compactors. An extrusion granulator is preferred.
The extrusion grain size varies depending on the raw material being used and/or the amount of added water, but is typically within a range from 0.2 to 2.0 mm, and preferably from 0.5 to 1.2 mm.

The obtained granulated material can be dried using conventional drying and grain size regulation steps, and if required, may be subjected to a sieving treatment. Examples of dryers that may be used include air flow band dryers, stirring dryers, fluidized bed dryers, vibration dryers and bed-type dryers. Examples of grain size regulators that may be used include a Marumerizer, pin mills and grinders. Examples of the sieving device include gyro shifters and electromagnetic vibration sieves.

There are no particular limitations on the drying step, provided it is capable of removing the water added during the kneading step, and does not cause any chemical change within the composition. The drying temperature and drying time vary depending on the amount of water added and the device used for the drying, although the drying temperature is typically within a range from room temperature to 100°C, and preferably from 40 to 90°C, whereas the drying time is typically within a range from 2 minutes to 3 hours, and is preferably from 10 minutes to 1 hour.

Further, another method of the present invention is (2) a method of adding water to the powdered agrochemical wettable composition or powdered agrochemical water-soluble composition, and then performing stirring granulation and drying.
In this method, the water addition may be performed using the water addition methods and conditions described above for method (1), or the water addition and granulation may be performed using a stirring granulator.
Conventional conditions and devices may be used in this method, and specific examples include stirring/mixing granulators such as a vertical granulator (manufactured by Powrex Corporation), high-speed mixing microgranulators such as a SPARTAN granulator (manufactured by Dalton Co., Ltd.), continuous stirring granulators such as a FLOW-JET granulator (manufactured by Okawara Corporation), and centrifugal tumbling coating devices such as a GRANULEX (manufactured by Freund Corporation).
Drying may be performed using the same drying methods and conditions as those described above for method (1).

Further, yet another method of the present invention is (3) a method of adding water to the powdered agrochemical wettable composition or powdered agrochemical water-soluble composition, and then performing kneading and spray-drying.
In this method, the water addition and the kneading may be performed using the same methods and conditions as those described above for method (1).
The spray drying step can effect granulation and drying. A spray dryer can be used for the spray drying, and specific examples of the dryer include granulating dryers such as a SPRUDE dryer (manufactured by Okawara Corporation), and spray dryers such as a Spray dryer L/OC (manufactured by Okawara Corporation), a spray drying apparatus (manufactured by Yamato Scientific Co., Ltd.) and a Coulter spray dryer (manufactured by Japan Chemical Engineering & Machinery Co., Ltd.).

Furthermore, yet another method of the present invention is (4) a method of adding water to the powdered agrochemical wettable composition or powdered agrochemical water-soluble composition, and then performing fluidized bed granulation.
The water addition may be performed using the same methods and conditions as those described above for method (1).
In the fluidized bed granulation step, granulation and drying can be performed. Specific examples of the fluidized bed granulator include a microparticle coating granulator GPCG-CT (manufactured by Powrex Corporation), a microparticle coating granulator SFP (manufactured by Powrex Corporation), a tumbling flow coater "MULTIPLEX" (manufactured by Powrex Corporation), a fluidized bed granulation coater "Flow coater" (manufactured by Okawara Corporation) a continuous flow granulating dryer "MIXGRAD" (a registered trademark, manufactured by Okawara Corporation), and a composite granulation coating apparatus "SPIRLAFLOW" (manufactured by Freund Corporation).

Furthermore, yet another method of the present invention is (5) a method of pressure molding the powdered agrochemical wettable composition or powdered agrochemical water-soluble composition. For the pressure molding, pressure molding apparatus including dry pressure rollers such as a compacting machine or a briquetting machine can be used. Specific examples of the pressure molding apparatus include a rotary powder molding press (manufactured by Kikusui Seisakusho Lid.), a single punch tableting machine (manufactured by Okada Seiko Co., Ltd.), a FUJIPRESS (manufactured by Fuji Yakuhin Kikai Co., Ltd.), a standing press (manufactured by Fuji Yakuhin Kikai Co., Ltd.), and a high-speed tableting machine (manufactured by Fette GmbH).

In the method of the present invention, (a) the granulated material obtained from one of the methods described above is subjected to grinding. There are no particular limitations on the grinding device used, provided an appropriate grain size can be obtained, and examples include screw extruders such as a Meat Chopper (manufactured by Hiraga Kosakusho Co., Ltd.) and a Dome Granulator (manufactured by Fuji Paudal Co., Ltd.), hard grinders such as a ROTOPLEX (manufactured by Hosokawa Micron Group), and pulverizing-type grinders such as a Roll Granulator (manufactured by Nippon Granulator Co., Ltd.).

Moreover, if necessary, (b) the ground product obtained in this manner may be subjecting to sieving. There are no particular limitations on the sieving apparatus provided it is capable of performing sieving, and examples include gyro shifters and electromagnetic vibration sieves.

The grain size following grinding is preferably within a range from 50 to 2,000 µm, and more preferably from 100 to 800 µm. However, all of the granules need not necessarily have a grain size that falls within this range, provided that the grain size that represents the maximum within the total grain size distribution falls within this range. Further, sieving can be used to obtain only those granules of the required grain size.
Further, the shape of the granules of the granular agrochemical composition varies depending on the method and conditions used for preparing the granules, although the shape is typically amorphous, cubic, rectangular cubic, triangular pyramidal, conical, circular cylindrical, spherical, dumbbell-shaped, ellipsoidal, egg-shaped, convex lens-shaped, concave lens-shaped or plantar. Of these, amorphous, circular cylindrical, spherical and ellipsoidal shapes are preferred.
Using the method described above, a powdered agrochemical wettable composition or a powdered agrochemical water-soluble composition can be converted to a granular agrochemical composition. In this case, a powdered agrochemical wettable composition yields a granular wettable powder, and a powdered agrochemical water-soluble composition yields a granular water-soluble product.

### (Use of granular agrochemical composition)

The granular agrochemical composition of the present invention is usually diluted with water, and then depending on the variety of the agrochemical active ingredient and the intended use, the diluted liquid can be sprayed onto agricultural land such as paddy fields, dry paddy fields, seedling propagation boxes, dry fields, orchards, mulberry plantations, hot houses and open fields, non-agricultural land such as forests, grasslands, golf courses, roadside trees, roads, road verges and marshes, or water systems such as ponds, reservoirs, rivers, watercourses and sewerage systems. The amount of the agrochemical composition applied, reported as an equivalent amount of the agrochemical active ingredient per 1,000 m², is typically within a range from 0.1 to 200 g, and preferably from 0.5 to 120 g. The granular agrochemical composition is diluted with an appropriate amount of water, and can then be applied using a power sprayer or manual sprayer. The dilution ratio is typically within a range from 3- to 10,000-fold, and preferably from 5- to 8,000-fold.

In the case where, for example, the granular agrochemical composition is used within an irrigation treatment of a rice seedling propagation box using wet-rice cultivation, the amount of the agrochemical composition used, reported as an equivalent amount of the agrochemical active ingredient per single rice seedling propagation box (typically having an area of approximately 0.16 m²) is typically within a range from 0.1 to 10 g, and preferably from 0.5 to 5 g.

The dilution ratio of the granular agrochemical composition within the dilute liquid varies depending on the amount of the agrochemical active ingredient within the granular agrochemical composition and the situation in which the dilute liquid is to be applied, but is typically within a range from 3- to 10,000-fold, preferably from 5- to 8,000-fold, and still more preferably from 10- to 5,000-fold. The amount applied of a water-diluted liquid of the granular wettable powder of the present invention, per seedling propagation box, is typically within a range from 100 to 2,000 ml, and preferably from 200 to 1,500 ml. Examples of the method used for applying the dilute liquid include methods that involve application using a watering can, sprinkler or shuttle irrigation device, and methods in which the liquid is applied using irrigation equipment provided on a seedling propagation box seeding machine.

Furthermore, there are no particular limitations on the timing of when the granular agrochemical composition of the present invention is applied, provided it is during the propagation period, although application is usually performed in the period from prior to seed sowing through until prior to transplanting. From the viewpoint of performing the application in a laborsaving manner, application is preferably performed at the same time as seed sowing or planting.

### EXAMPLES

Examples of the present invention are described below, although the present invention is in no way limited by these examples.

### [Example 1]

### (Step 1)

A kneader (capacity: 500 L, manufactured by Dainippon Kogyo Co., Ltd.) was charged with 90 Kg of MOSPILAN wettable powder and water (amount of added water: 8%), and the resulting mixture was kneaded for 40 minutes. The kneaded material was then extruded through an extrusion granulator (twin dome granulator, model TDG-100, manufactured by Fuji Paudal Co., Ltd.) using a 0.8 mmφ screen. The extruded product was then dried and granulated by one passage through a vibrating fluidized bed dryer (model VDF1 0800, manufactured by Tokuju Corporation), yielded a granulated material.

### (Step 2)

The granulated material having an extruded diameter of 0.8 mmφ was ground using a grinder (Roll Granulator, manufactured by Nippon Granulator Co., Ltd.), yielded a granular agrochemical composition (product a) having the target grain size (grain size: 150 to 710 µm, maximum proportion: 500 to 600 µm). Grinding was performed using two stages of rollers, with a pitch of 0.6 and a clearance of 5 (0.43 mm) in the first stage, and a pitch of 0.6 and a clearance of 5 (0.43 mm) in the second stage. The yield of the target grain size was 94.5%.

### [Example 2]

With the exception of altering the grinding conditions in step 2 of example 1 to a pitch of 0.6 and a clearance of 0.6 (0.5 mm) in the first stage, and a pitch of 0.6 and a clearance of 5 (0.43 mm) in the second stage, a granular agrochemical composition (product b) was obtained in the same manner as example 1. The yield of the target grain size was 94.8%.

### [Example 3]

With the exception of altering the grinding conditions in step 2 of example 1 to a pitch of 0.6 and a clearance of 0.6 (0.51 mm) in the first stage, and a pitch of 0.6 and a clearance of 4 (0.35 mm) in the second stage, a granular agrochemical composition (product c) was obtained in the same manner as example 1. The yield of the target grain size was 94.9%.

### [Comparative example 1]

Only step 1 of example 1 was performed, and a granulated product (product x) was obtained without performing grinding with a granulator.

### [Test example 1]

For each of the obtained products a to c and x, a solubility test was performed using the procedure described below. Namely, 250 mL of tap water and 0.125 g (2,000-fold dilution) of the granular product were placed in a measuring cylinder and left to stand for 30 seconds. After 30 seconds, the measuring cylinder was inverted at a rate of one inversion every 2 seconds, and the number of inversions required to completely dissolve the product was measured.

The results are shown in the table below.

**[Table 1]**

| Sample name | Product a | Product b | Product c | Product x |
|---|---|---|---|---|
| Number of inversions | 10 | 12 | 7 | 23 |

The unground product required more than 15 inversions, whereas grinding enabled the production of granular agrochemical compositions that exhibited good disintegration properties (solubility), with dissolution achieved in not more than 15 inversions.

### [Example 4]

Approximately 5 g of each of the wettable powders and water-soluble products listed in Table 2 was placed in a mortar. An amount of pure water prescribed for each sample was then added to the mortar, and kneading was performed for approximately 5 minutes using a pestle. The kneaded material was placed on a 0.7 mmφ screen and extruded through the screen by applying pressure from above using the pestle. The thus obtained extruded material was dried for 20 minutes in a fluidized bed dryer (flow coater, model FLO-1, manufactured by Freund Corporation) using an inlet temperature of 50°C, and was then sieved using a sieve of 149 to 1,410 µm (yielding a material equivalent to an unground granular wettable powder or unground water-soluble product).
Subsequently, the back of a spatula was used to crush and grind the material, and the ground material was sieved using a sieve of 149 to 600 µm, yielding a series of granular wettable powders and granular water-soluble products.

### [Test example 2]

The number of inversions required for each of the granular products was measured using the same procedure as test example 1. The results are shown in the table below.

**[Table 2]**

| Product name | | Active ingredient content (%) | Amount of added water (%) | Number of inversions for disintegration (dissolution) | |
|---|---|---|---|---|---|
| | | | | Unground | 149 to 600 µm |
| Fungicide | HARMOMATE wettable powder | 80% | 8% | 17 | 2 |
| | KALIGREEN | 80% | 7% | 15 | 2 |
| | ALIETTE wettable powder | 80% | 11% | >30 | 8 |
| | MANAGE wettable powder | 15% | 32% | 15 | 3 |
| | SANLIT wettable powder | 20% | 29% | 22 | 3 |
| Pesticide | ADION wettable powder | 20% | 40% | 18 | 3 |
| | TELSTAR wettable powder | 2% | 24% | 15 | 2 |
| | ADMIRE wettable powder | 10% | 22% | 19 | 3 |
| Acaricide | PYRANICA wettable powder | 10% | 38% | >30 | 6 |
| | OSADAN wettable powder 25 | 25% | 30% | 21 | 2 |

The unground products required at least 15 inversions, whereas grinding enabled the production of granular agrochemical compositions that exhibited good disintegration properties (solubility), with dissolution achieved in not more than 15 inversions.

### [Example 5]

Approximately 2.5 g of each of the wettable powders and water-soluble products listed in Table 3 was placed in a metal container (rice mortar) with an internal diameter of 20 mm, a metal pestle (pounder) was inserted into the container, and a high pressure jack (model 1-313-01, manufactured by AS ONE Corporation) was used to apply a prescribed pressure.
Subsequently, the resulting compressed material was placed in a mortar, ground finely, and then sieved using a sieve of 149 to 1,000 µm, thus yielding a granulated wettable powder or granulated water-soluble product.

### [Test example 3]

The number of inversions required for each of the granular products was measured using the same procedure as test example 1. The results are shown in the table below.

**[Table 3]**

| Product name | | Active ingredient content (%) | Pressure (tolls) | Number of inversions for disintegration (dissolution) |
|---|---|---|---|---|
| | | | | 149 to 1,000 µm |
| Fungicide | Z-BORDEAUX | 58% | 1 | 2 |
| | BENLATE wettable powder | 50% | 1 | 2 |
| | MANAGE wettable powder | 15% | 0.5 | 2 |
| | | | | |
| | SANLIT wettable powder | 20% | 0.5 | 2 |
| | FROWNCIDE wettabte powder | 50% | 0.5 | 2 |
| | BLIZZARD wettable powder | 60+2.4% | 0.5 | 2 |
| Pesticide | DIAZINON wettable powder 34 | 34% | 0.5 | 2 |
| | AGROTHRIN wettable powder | 6% | 0.5 | 2 |
| | CYHALON wettable powder | 5% | 0.5 | 2 |
| | ARDENT wettable powder | 3% | 0.5 | 5 |
| | MOSPILAN wettable powder | 20% | 2 | 5 |
| Acaricide | NISSORUN wettable powder | 10% | 0.5 | 3 |
| | OSADAN wettable powder 25 | 25% | 0.5 | 2 |
| | PYRANICA wettable powder | 10% | 0.5 | 2 |
| Herbicide | EIGEN wettable powder | 47% | 0.5 | 2 |
| Plant growth regulator | B-NINE wettable powder 80 | 80% | 2 | 10 |

Granular agrochemical compositions that exhibited good disintegration properties (solubility), with dissolution achieved in not more than 15 inversions, were able to be produced.

The manufacturers of the various products used in the tests are listed below.

**[Table 4]**

| Product name | Manufacturer | Name of active ingredient |
|---|---|---|
| Z-BORDEALTX | Nihon Nohyaku Co., Ltd. | basic copper sulfate (inorganic copper) |
| HARMOMATE wettable powder | Nippon Soda Co., Ltd. | sodium bicarbonate |
| KALIGREEN | Toagosei Co., Ltd. | potassium bicarbonate |
| ALIETTE wettable powder | Nippon Soda Co., Ltd. | fosetyl |
| BENLATE wettable powder | DuPont Corporation | benomyl |
| MANAGE wettable powder | Hokko Chemical Industry Co., Ltd. | imibenconazole |
| SANLIT wettable powder | Sankyo Co., Ltd. | simeconazole |
| FROWNCIDE wettable powder | Nippon Soda Co., Ltd. | fluazinam |
| BLIZZARD wettable powder | Nihon Nohyaku Co., Ltd. | TPN + cymoxanil |
| DLAZINON wettable powder 34 | Hokko Chemical Industry Co., Ltd. | diazinon |
| ADION wettable powder | Hokko Chemical Industry Co., Ltd. | permethrin |
| AGROTHRIN wettable powder | Kumiai Chemical Industry Co., Ltd. | cypermethrin |
| CYHALON wettable powder | Nihon Nohyaku Co., Ltd. | cyhalothrin |
| TELSTAR wettable powder | Nissan Chemical Industries, Ltd. | bifenthrin |
| ARDENT wettable powder | Bayer AG | acrinathrin |
| ADMIRE wettable powder | Kumiai Chemical Industry Co., Ltd. | imidacloprid |
| MOSPILAN wettable powder | Nippon Soda Co., Ltd. | acetamiprid |
| NISSORUN wettable powder | Nippon Soda Co., Ltd. | hexythiazox |
| OSADAN wettable powder 25 | BASF Agro Company | fenbutatin oxide |
| PYRANICA wettable powder | Nippon Soda Co., Ltd. | tebufenpyrad |
| EICEN wettable powder | DIC Corporation | pyributicarb |
| B-NINE wettable powder 80 | Nippon Soda Co., Ltd. | daminozide |

### INDUSTRIAL APPLICABILITY

The present invention enables a powdered agrochemical wettable composition or a powdered agrochemical water-soluble composition to be converted only in form to a granular agrochemical composition without altering the formulation thereof. By converting only the form of the powdered agrochemical wettable composition or powdered agrochemical water-soluble composition to a granular agrochemical composition without altering the formulation of the composition, there is no danger of the types of spray nozzle blockages that can occur when a packaged product is diluted. Further, because the obtained granular agrochemical composition does not suffer from dusting, and yet exhibits satisfactory disintegration and suspension properties, it is able to satisfy the requirements for ease of handling and operator safety, and is therefore extremely useful industrially.

## Claims

1. A method of producing a granular agrochemical composition, wherein by conducting one of steps (1) to (5) below, followed by steps (a) and (b), a powdered agrochemical wettable composition or a powdered agrochemical water-soluble composition is converted only in form to a granular agrochemical composition, without altering components or component proportions within said composition:
(1) a step of adding water to said powdered agrochemical wettable composition or said powdered agrochemical water-soluble composition, and then performing kneading, extruding and drying,
(2) a step of adding water to said powdered agrochemical wettable composition or said powdered agrochemical water-soluble composition, and then performing stirring granulation and drying,
(3) a step of adding water to said powdered agrochemical wettable composition or said powdered agrochemical water-soluble composition, and then performing kneading and spray-drying,
(4) a step of adding water to said powdered agrochemical wettable composition or said powdered agrochemical water-soluble composition, and then performing fluidized bed granulation,
(5) a step of pressure molding said powdered agrochemical wettable composition or said powdered agrochemical water-soluble composition,
(a) a step of performing microgranulation by grinding, and
(b) if necessary, a step of performing grain size regulation by sieving following said microgranulation.

2. The method according to claim 1, wherein said powdered agrochemical wettable composition is a TOPSIN-M (a registered trademark) wettable powder, a TRIFMINE (a registered trademark) wettable powder, a BELLKUTE (a registered trademark) wettable powder, or a NISSORUN (a registered trademark) wettable powder.

3. The method according to claim 1, wherein said powdered agrochemical water-soluble composition is a MOSPILAN (a registered trademark) water-soluble composition or a B-NINE (a registered trademark) 80 water-soluble composition.

4. A granular agrochemical composition produced by the method according to any one of claims 1 to 3.
